# EUROPEAN PATENT APPLICATION

(11) **EP 1 519 132 A2**
(43) Date of publication of application: **30.03.2005**
(21) Application number: 04026527.4
(22) Date of filing: 04.07.1997
(51) Int. Cl.: F25D 17/06, F25D 21/12

(54) **A refrigeration system with variable forced ventlation**

(30) Priority: 27.11.1996 IT mi962475
(62) Divisional of application: 97202071.3
(71) Applicant: CANDY S.p.A., I-20052 Monza (Milano) (IT)
(72) Inventor: Fumagalli, Silvano, 20052 Monza (IT)
(74) Representative: Siniscalco, Fabio

(57) **Abstract**

The invention relates to a refrigeration system (1) such as a domestic freezer, refrigerator, or the like, in which means (20, 21) are provided for generating a forced circulation of air in a cooled compartment (4); in particular, in the system of the invention, the forced air-circulation is variable in dependence on the profile of the temperature inside the aforementioned compartment (4) as a function of time.

According to a preferred embodiment, the ventilation means comprise a fan (20) having an adjustable, brushless, direct-current motor (21) or an alternating-current induction motor adjustable by frequency variation.

## Description

The invention relates to a refrigeration system comprising: a compartment cooled by a refrigeration unit of the type including a condenser, a compressor and an evaporator exchanging heat with the compartment, ventilation means for generating a forced circulation of air inside the cooled compartment, means for detecting at least one operating parameter of the system, and a regulation system which is intended to maintain predetermined temperature conditions in the cooled compartment, and to which the compressor and the ventilation means are subservient.

Before going any further, by way of introduction to this description and to the appended claims, the term refrigerating system is intended to indicate in general herein the possible applications of the refrigeration units mentioned above which are intended for maintaining temperature conditions varying from a few degrees above 0°C (about 5°C) down to -18°C and even lower.

In practice, these applications relate mainly to normal domestic refrigerators and freezers with one or more compartments, to refrigerated product-display counters and windows, to chambers of various shapes and sizes for the storage or movement of perishable goods (for example, for preserving meats, fish, fruit, etc. and their transportation in refrigerated containers or vans) even in deep-frozen form, etc.; however, the use of the above-mentioned refrigeration systems in the cryogenics field, that is, in a context in which temperatures much lower than those used in the more common applications just listed, should not be excluded.

In the refrigeration systems in question, it is known to use suitable means for generating a forced circulation of air inside the cooled compartment.

The forced circulation of air may in fact be used to prevent the formation of temperature gradients in the cooled compartment, thus rendering the temperature more uniform or, in the case of systems having defrosting systems, such as so-called "no-frost" refrigerators, the forced ventilation is used to melt the ice formed on the evaporator. Some examples of "no-frost" refrigerators are given in Italian patent applications Nos. MI91A002984 and MI91A002985, in the name of the Applicant of the present application.

It should, however, be pointed out that both of these applications describe refrigerators having two compartments communicating with one another by means of at least one duct through which the air moved by a fan is passed; in these refrigerators, the forced air-circulation serves for cooling the two compartments as well as for the aforementioned defrosting.

As stated above, the refrigeration systems considered herein also have thermostatic regulation systems, that is, systems which can maintain a certain temperature inside the cooled compartment with variations of the general operating conditions of the system; these conditions may be the temperature selected by the user of the compartment, the temperature of the atmosphere outside the system, the number and duration of openings and closures of the cooled compartment in order to remove or add to its contents, the heat capacity of whatever is preserved in the aforementioned compartment, and hence the quantity of heat to be removed, that is, as is also, said by experts in the art, the frigories to be produced, as well as any other variables which affect the operation of the system.

When the means for detecting an operating parameter of the refrigeration system, usually the temperature of the cooled compartment, indicate a value higher than the preselected value, the regulation system activates the compressor of the refrigeration unit and the ventilation means in order to bring the temperature in the cooled compartment back to the desired value.

In practice, therefore, the regulation carried out is of the ON/OFF (connected/disconnected) type, and thus operates with little flexibility even though, in order to make the regulation system more complete, sensors are sometimes provided for detecting the temperature of the evaporator, as shown in application MI91A002984 already cited.

With regard to the defrosting cycle in "no frost" refrigerators, this is usually carried out when the compressor is disconnected so as to enable the ventilation means to bathe the evaporator with air at a temperature such as to melt the ice formed thereon; the duration of the defrosting cycle can be controlled by a timer or on the basis of a certain temperature being reached in the cooled compartment (in this connection see the two patent applications mentioned above).

Naturally, it is hardly necessary to state that the regulation system has suitable electronic apparatus of known type for coordinating the operation of the various parts of the system and achieving the regulation mentioned.

However, it has been found in refrigeration systems of the prior art that, in practice, regulation does not always take place in an optimal manner.

In fact, the number of frigories necessary to re-establish the desired temperature is sometimes quite high, so as to require the compressor to operate for a prolonged period with excessive energy consumption; this is the case, for example, when a large mass to be cooled, perhaps having a fairly high temperature in comparison with the -18°C usually used in freezers, is put in the refrigeration compartment, or when there are high temperatures outside the refrigeration system, as may occur during the warmer seasons of the year.

In other situations, moreover, the forced air-circulation in the cooled compartment may be obstructed by the bodies of the products present inside the compartment, so that the loss of pressure produced in the circulating air-flow slows its speed, consequently reducing the exchange of heat between the air and the evaporator of the refrigeration unit, as well as between the air and the mass to be cooled.

If these conditions of obstruction of the forced air-circulation occur, when the regulation system of the system is re-establishing the temperature provided for in the cooled compartment, this operation may take longer than necessary owing to the lower heat-exchange rate achieved; this also therefore leads to more prolonged operation of the compressor than normal, which again corresponds to a greater consumption of electrical energy.

Moreover, it should be pointed out that, if these operating overloads go on for long, they may lead to wear of the compressor and may thus require its replacement or at least necessitate major maintenance.

Although these problems could be overcome by an over-sized compressor, a solution of this type would involve an increase in consumption and in the production costs of the refrigeration systems which it would be convenient to avoid.

The object of the present invention is to solve the problems set out above in relation to the refrigeration systems of the prior art; this object is achieved by a system of the type indicated at the beginning of the description, the characteristics of which are set out in the appended claims.

For a better understanding of the invention as a whole with its characteristics and the advantages resulting therefrom, a description relating to two embodiments thereof is given below by way of nonlimiting example, with reference to the appended drawings, in which:
Figure 1 is a schematic, longitudinally-sectioned side view of a first refrigerator formed in accordance with the invention,
Figure 2 is a view similar to that of Figure 1 of a second refrigerator according to the invention,
Figure 3 is a view of the refrigerator shown in Figure 2, sectioned on the line III-III thereof, with a portion removed.

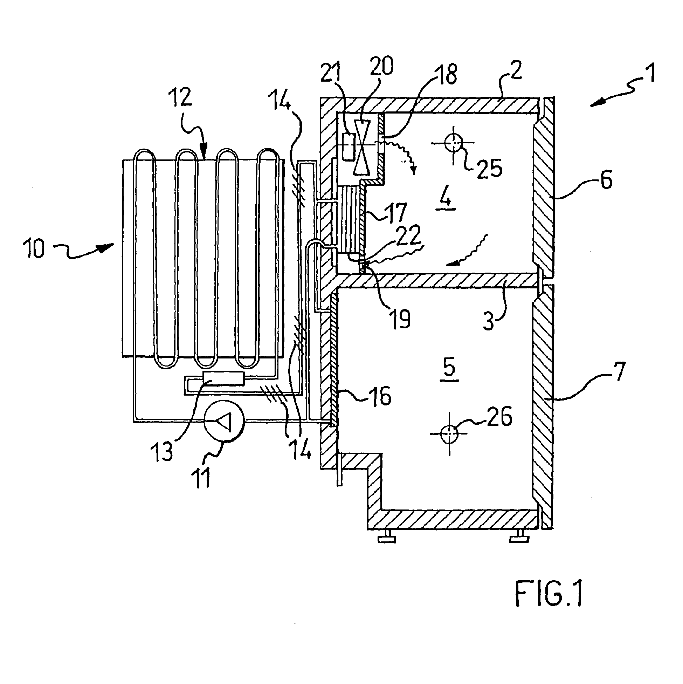

With reference to Figure 1, this shows a refrigerator for domestic use, generally indicated 1; this refrigerator comprises a cabinet 2 with insulated walls, in which a dividing wall 3 defines two compartments 4 and 5, of which the first is a freezer compartment and is therefore kept at a lower temperature than the second compartment 5 which is suitable for preserving foods. The compartments 4 and 5 have respective closure doors 6 and 7.

In the refrigerator 1, there is a refrigeration unit 10 including a compressor 11, a condenser 12 in the form of a coil, a filter 13, some expansion valves 14 for the refrigerant fluid circulating in the unit, a first evaporator 15 exchanging heat with the freezer compartment 4, and a second evaporator 16 exchanging heat with the second compartment 5. More precisely, the first evaporator 15 is in a double rear wall of the freezer compartment 4 defined by a wall 17 in which there are openings 18 and 19, the function of which will become clearer from the following description, the second evaporator 16 being incorporated in the rear wall of the second compartment 5.

The freezer compartment 4 also contains ventilation means 20 for generating a forced circulation of air inside the compartment, the means being constituted, in this embodiment, by a fan driven by a brushless, direct-current motor 21 having continuously-adjustable operating characteristics. An electrical resistor 22 is associated with the first evaporator 22 for defrosting it, in known manner.

Each compartment 4 or 5 of the refrigerator also contains temperature-detection means 25 and 26 constituted by normal thermistors.

The refrigerator of the invention has a regulation system to which the compressor 11 of the refrigeration unit and the motor 21 of the ventilation means 20 are subservient, and to which the thermistors 25 and 26 for detecting the temperature in the compartments 4 and 5 are connected; this regulation system also comprises an electronic control unit which is of known type and will not therefore be described in detail herein, and which is suitable for coordinating the operation of the various parts of the refrigeration system of the invention, as will be explained below.

In particular, the following description will relate to the operation of the refrigerator with reference solely to the freezer compartment 4 in which the ventilation means 20 are disposed, the second compartment 5 operating in the conventional manner for refrigerators for preserving foods at temperatures above 0°C without the use of forced ventilation.

It is necessary simply to point out that the refrigeration unit 10 has a switching valve, disposed downstream of the expansion valves 14 and not shown in the drawings, for diverting the flow of refrigerant fluid towards one or other of the evaporators 15 and 16 upon command by the regulation system.

When the thermistor 25 detects a temperature greater than that desired for the freezer compartment 4, this temperature being selectable by the user by means of the regulation system which has selection means such as knobs or the like for this purpose, the control unit switches on the compressor 11 and the ventilation means 20. In particular, in this embodiment of the invention, the initial speed of rotation of the motor 21 of the fan 20 upon which the initial flow-rate of air circulating in the compartment 4 depends is arranged so as to correspond to a predetermined value stored in the regulation system and determined in dependence on the dimensions of the compartment and of the refrigeration unit at the design stage.

As a result of the starting of the compressor and of the fan, a forced circulation of air is established in the compartment 4 from the opening 18 towards the opening 19, as indicated by the arrows in Figure 1 whilst, at the same time, the temperature inside the compartment 4 decreases progressively with a series of values identifying a curve of temperature against time. These values are detected by the thermistor 25 and transmitted to the control unit of the regulation system which compares them with a reference curve stored therein.

If the actual reduction in temperature in the compartment 4 takes place more slowly than is provided for by the reference curve, the control unit of the regulation system increases the speed of rotation of the motor 21 of the fan, thus increasing the forced circulation in the compartment 4 and consequently the exchange of heat between the air and the mass to be cooled contained in the compartment, as well as between the air and the evaporator 15; in this situation, the speed of rotation of the fan motor 21 is also changed by the regulation system on the basis of a respective program also stored in the control unit.

The speed of rotation of the fan calculated by the control unit on the basis of the aforementioned program is then maintained for a certain period of time the duration of which may either be predetermined, that is, constant, for example, with a fixed value of 1.2 or more minutes, stored in the control unit, or variable, that is, calculated by the aforesaid regulation program.

When, as a result of the change in the speed of rotation of the fan, the reduction in the temperature as a function of time returns to the values provided for by the reference curve, the compressor and the fan can be kept in operation until the desired temperature is re-established in the freezer compartment 4; after this reestablishment, both the compressor and the fan are switched off by the regulation system.

With regard to the operation of the device for defrosting the freezer compartment 4, this is activated when the compressor is not in operation or, in any case, when fluid is not circulating in the evaporator 15 because it is directed towards the other evaporator 16 by the switching valve. In these conditions, the regulation system thus causes electrical current to pass through the resistor associated with the evaporator, and also switches on the fan 20; the air circulates in the compartment 4 from the opening 18 to the opening 19 as explained above and thus bathes, in succession, the electrical resistor 22, so as to be heated, and then the evaporator 15 with the ice formed thereon, thawing the ice. A temperature change also takes place in the compartment 4 in this case, but in the opposite direction to that described above; that is, the average temperature in the compartment will be raised from the -18°C envisaged for its normal operation to a value determined essentially by the thermal balance between the heat exchanged by the air with the electrical resistor and that exchanged with the ice on the evaporator.

The temperature rise is detected once more by the thermistor 25 and is indicated to the central control unit of the regulation system which compares it with a second reference curve suitably stored; if the curve of the temperature over time differs from the second reference curve, for example, because the forced circulation of air in the compartment 4 is impeded by pressure losses due to the presence of bodies which are bulky or are arranged in a disorderly manner, or for any other reason, the regulation system can correct this difference by increasing the speed of rotation of the motor 21 of the fan 20; this re-establishes in the compartment heat-exchange conditions for the air circulating in the compartment such as to permit a temperature-change in the compartment conforming to the second reference curve mentioned.

For greater safety, however, the duration of the defrosting cycle is in any case preferably limited to a predetermined period of time between a lower value and an upper value, stored in the control unit.

It can therefore be understood from the foregoing description that the refrigeration system of the invention achieves the object set at the beginning.

In fact, the variation of the flow-rate and the speed of the air in forced circulation therein, favours the heat exchanges which it undergoes in the compartment 4 to be cooled; it is thus possible to reduce the times necessary for re-establishing the desired temperature conditions in the compartment in comparison with a conventional system having ON/OFF regulation as in the prior art, naturally if other conditions remain the same.

In other words, the system of the invention enables the number of frigories exchanged inside the compartment cooled in a certain period of time to be varied so that the periods for which the compressor is switched on can be reduced; this result is achieved by variation of the flow-rate and of the speed of the air brought about by an increase in the speed of rotation of the motor 21 which drives the fan.

Moreover, with a suitable selection of the motor, the increase in energy consumption necessary for its regulation is less than the saving in consumption resulting from the reduction in the operating periods of the compressor, which is thus advantageous in overcoming the problems referred to with reference to the prior art.

It should also be pointed out that the refrigeration system of the invention is particularly adaptable, since it can cope autonomously with situations in which there is a considerable requirement for frigories, such as situations which occur as a result of continual opening of the cooled compartment, or when the mass to be cooled or, more correctly, its heat capacity, is large or, finally when the forced air-circulation in the compartment is obstructed in some way; in fact, in these situations, the regulation system reacts by increasing the rate of revolution of the motor which drives the fan so as to re-establish a cooling rate conforming to the reference rate in the compartment.

The situation referred to is in fact that in which the cooled compartment is opened frequently during a certain period of time; as soon as the regulation system of the refrigerator switches on the compressor and the ventilation means in accordance with the operating system described above, the temperature in the compartment tends to decrease; however, since the door of the compartment is opened frequently during the regulation stage, clearly the temperature therein will decrease more slowly than normally or may not decrease at all; in such circumstances, the regulation system increases the fan speed so as to increase the cooling capacity of the system and compensate for the unusual operating situation.

Considerations similar to those just set out also apply when bodies with large heat capacities, that is, bodies for which the product of their specific heat by their mass is large, are put in the compartment. For example, it is possible to consider a situation in which a piece of meat of a certain size is put into a normal domestic freezer at ambient temperature. In fact, after the temperature in the compartment rises from the normal -18°C as a result of the presence of these bodies, the regulation system switches on the compressor and starts the fan at the initial speed as described above; the presence of bodies with large heat capacities, however, causes a slower reduction in the temperature over time (or, if it is preferred, cooling rate) inside the cooled compartment than the first reference curve already mentioned which generally relates to average operating conditions of the refrigeration system.

In these circumstances, the regulation system therefore increases the forced air-circulation in accordance with the teaching already described so as to bring the temperature reduction in the compartment back within the predetermined limits.

Finally, it will also be understood that, when the flow of air circulating in the compartment is obstructed and thus slowed down, for example, for the reasons explained above, if the regulation system switches on the compressor and starts the fan at the predetermined initial speed, the temperature will decrease more slowly over time than if the forced air-circulation were not obstructed, other conditions remaining the same. In this eventuality, the regulation system can also detect the operating anomaly of the refrigeration system and can bring the situation back within the reference parameters by increasing the speed of rotation of the fan.

In summary, therefore, the system of the invention is self-regulating even if it has to operate in unusual situations.

With reference to the first cooling curve stored in the control unit, it can be determined experimentally at the stage of the design of the system by means of operating tests in predetermined conditions; it can therefore be understood that this curve will vary from one system to another and it need hardly be pointed out that it is possible to store, in one control unit, several reference curves corresponding to respective operating conditions of the system, for example, relating to minimum, average, and maximum operating conditions. Naturally, the considerations just expressed may also be applied to the second reference curve relating to the defrosting cycle.

With regard to the operation of the motor, on the other hand, it is appropriate to stress that, for the system of the invention, motors without sliding contacts, such as brushless, direct-current motors of the type used in the preceding embodiment or alternating-current induction motors are to be preferred; the latter should preferably have operating characteristics adjustable continuously by control of the supply frequency.

The preference for these motors is due both to reasons of a strictly electro-technical nature and, in particular, to the fact that, since they have to operate in environments in which there is a certain humidity, motors having sliding electrical contacts do not ensure adequate reliability and suitability from the point of view of health and hygiene. In this connection, it is in fact important to bear in mind that the sliding electrical contacts mentioned inevitably produce odours connected with the friction which distinguishes them and may possibly release dust particles which might circulate in the cooled compartment, contaminating its contents, as a result of the forced ventilation.

The use of variable forced air-circulation in accordance with the teaching of the invention is also particularly advantageous owing to the uniform manner in which the defrosting cycle of an evaporator is carried out.

In fact, as stated above, by virtue of the variation of the forced air-circulation it is possible to regulate the heat exchanged thereby with the ice formed on the evaporator; if this regulation capability were not provided, the quantity of ice melted during a predetermined time might be less than that desired, owing to insufficient ventilation caused, for example, by the presence of obstructions in the compartment which slow the flow of air in circulation. The above-mentioned regulation eliminates this risk with considerable benefits with regard to the effectiveness of the defrosting carried out.

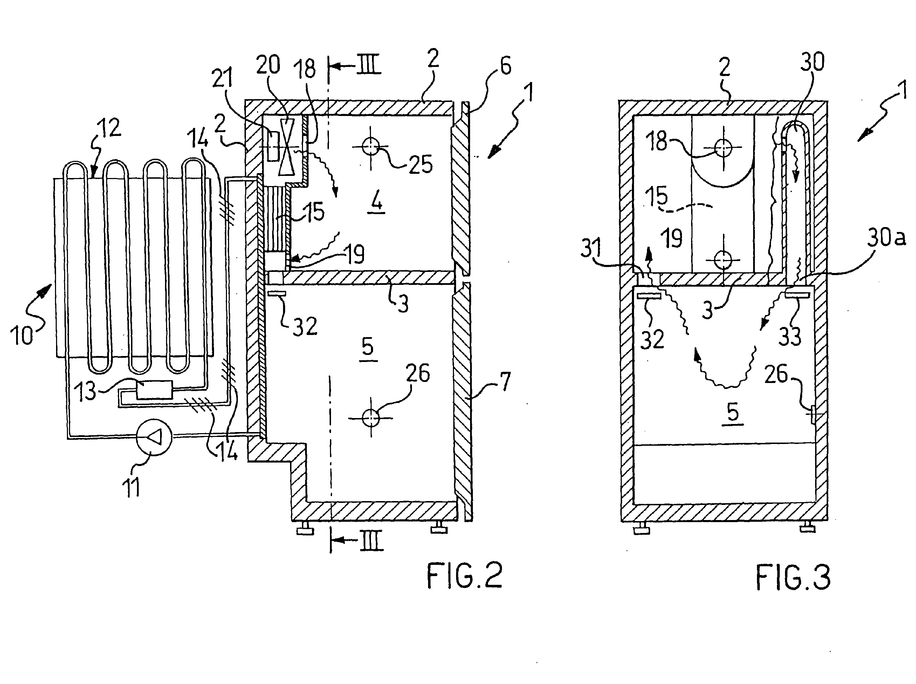

Arguments similar to the foregoing also apply to the second embodiment of the refrigeration system of the invention shown in Figures 2 and 3, in which the parts of a refrigerator according to the invention which are structurally or functionally equivalent to those already described are indicated by the same reference numerals.

This second embodiment of the invention differs from the first essentially in that the compartment 4 which is at the lower temperature is in fluid communication with the second compartment 5 which is at the higher temperature; in practice, therefore, the latter is cooled by means of air coming from the freezer compartment 4 which is therefore at a temperature low enough to bring about the cooling of the second compartment 5.

For this purpose, in the double rear wall of the compartment 4 in which the fan 20 and the evaporator 15 are situated, there is a duct 30 having one end 30a extending through the dividing wall 3 and communicating with the second compartment 5; in the dividing wall 3 there is also an opening 31 which puts the compartments 4 and 5 into communication. At the end 30a of the duct and in the region of the opening 31, the dividing wall 3 has respective shutters 32 and 33, the opened or closed condition of which are controlled by the regulation system of the refrigerator.

The compartments 4 and 5 are cooled in a manner similar to that described above; it is necessary only to point out that, in this embodiment, since fluid communication between the two compartments 4 and 5 is possible, when the temperature of the latter, detected by the thermistor 26, is within a desired range of values, the shutters 32 and 33 are in the closed condition so as to isolate the compartments 4 and 5, cutting off the aforementioned fluid communication. On the other hand, when the thermistor 26 detects a rise in the temperature in the compartment 5, for example, as a result of the opening of its door 7, the shutters 32 and 33 will be in the open condition so as to allow the compartment 5 to be cooled, re-establishing the desired temperature therein.

In this embodiment, the variation in the temperature of the compartment 5 over time is also detected by the thermistor 26 and calculated by the control unit of the regulation system which compares the values detected with a corresponding reference curve stored therein in order to bring about any change in the speed of rotation of the fan 20 and hence in the forced circulation of air in the refrigerator.

With regard to the freezer compartment 4 and the regulation of its temperature, naturally the remarks made above with reference to the other embodiment apply; however, for the defrosting of the evaporator 15, which takes place when the compressor is switched off, this time, the heat necessary to melt the ice formed on the evaporator 15 is no longer provided by an electrical resistor but by the flow of air coming from the compartment 5 which, as stated above, is at temperatures above 0°C. For this purpose, as well as switching on the fan, the regulation system also opens the shutters 32 and 33 to allow air to recirculate from the compartment 5 to the evaporator, as indicated by the arrows in Figure 3, along a path which comprises, in succession, the duct 30, and the openings 31 and 19 in the dividing wall 3 and in the rear wall 17 of the freezer compartment 4, respectively.

In this embodiment, the change in temperature detected by the thermistor 25 and indicated to the control unit of the regulation system thus also permits a check as to whether the defrosting is taking place correctly in comparison with a corresponding reference curve; in fact, if this does not occur the regulation system changes the speed of rotation of the motor 21 of the fan 20; this variation brings about a change in the flow-rate and in the speed of the air coming from the compartment 5 as well as in the heat exchanged thereby with the ice on the evaporator so as to bring the defrosting operation back within the predetermined parameters.

In this embodiment, the duration of the defrosting cycle is also preferably timed.

Amongst the further important advantages achieved by the system of the invention, it should be stressed that its functional flexibility permits the development of simplified embodiments in comparison with the examples described.

In particular, it should be pointed out that the principle of the invention can be used in order to produce a programmable refrigeration system; in fact, it can easily be seen that, on the basis of the teaching provided by the invention, it would be possible to build a domestic freezer in which the rate of freezing of the foods could be selected by the user.

For example, a user might wish to freeze a certain quantity of meat, fish or other food; with the provision of a suitable regulation program on the control unit of the refrigeration system, it would be possible to arrange for a user to be able to set the time desired for the freezing of the aforementioned quantity of food.

The control unit would calculate automatically the necessary rate of rotation of the fan to bring about freezing within the time required by the user.

In other words, instead of having a self-regulating refrigeration system, in a variant of this type, it would be left to the user to select the weight and the type of product to be frozen, as well as the time required for the freezing; on the basis of this information, the regulation system could easily calculate the frigories to be produced within the period of time selected and, in parallel, the speed of rotation of the fan necessary to achieve this result.

It is hardly necessary to point out that an embodiment of the invention of this type could be formed either in combination with or as an alternative to that of the preceding embodiments in which autonomous regulation is envisaged.

Naturally, further variations and improvements of the invention with respect to those described up to now should not be excluded; the embodiments described above in fact relate to two refrigeration systems which are somewhat simplified and limited in the number as well as the operation of their components in order to facilitate understanding of the principles on which the invention is based.

As reference for possible variants of refrigeration systems, those described and claimed in the patent applications MI91A002984 and MI91A002985 already mentioned may, for example, be considered.

In addition, it is also clear that to improve the performance of a refrigeration system in accordance with the present invention, the use of several fans rather than the single one shown in the drawings should not be excluded and it is also possible to use sensors of various kinds for detecting the various operating parameters of the system of the invention in order to achieve even more precise control thereof: by way of indication, the possibility of using a larger number of temperature detectors than that used in the embodiments described above as well as that of using means for detecting the speed of circulation of the air at some points in the system, and so on, are not therefore considered to be excluded. Naturally it will be necessary to select, at the time in question, solutions which achieve a compromise between the level of performance required of the apparatus and the complexity of its regulation system which is connected with excessive proliferation of parameters to be kept under control.

Moreover, with regard to the control of the fan, other solutions should not be excluded but should satisfy the criteria and conditions set out above, which make brushless direct-current motors or alternating-current induction motors preferable.

## Claims

1. A refrigeration system comprising: a compartment (4) cooled by a refrigeration unit (10) of the type including a condenser (12), a compressor (11) and an evaporator (15) exchanging heat with the compartment (4), ventilation means (20, 21) for generating a forced circulation of air inside the cooled compartment (4), means (25) for detecting the temperature in the cooled compartment (4), and a regulation system which is intended to maintain predetermined temperature conditions in the cooled compartment (4) and to which the compressor (11) and the ventilation means (20, 21) are subservient, **characterized in that** the ventilation means (20, 21) can bring about a variable forced circulation of air.

2. A refrigeration system according to Claim 1, **characterized in that** the forced circulation of air is variable in dependence on the change in temperature over time detected in the cooled compartment (4).

3. A refrigeration system according to either of Claims 1 and 2, **characterized in that** the ventilation means comprise a fan (20) driven by a brushless, direct-current electric motor (21) or an alternating-current induction motor.

4. A refrigeration system according to any one of the preceding claims, **characterized in that** the ventilation means (20, 21) can bring about a forced circulation of air in order to defrost the evaporator (15) upon command by the regulation system, when the compressor (11) of the refrigerating unit (10) is switched off.

5. A refrigeration system according to Claim 4, in which the air circulating in order to carry out the aforementioned defrosting is heated before passing over the evaporator (15).

6. A refrigerating system according to any one of Claims 1 to 4, **characterized in that** it comprises means (30, 30a, 31, 32 and 33) for putting the cooled compartment (4) into fluid communication with a second compartment (5) having a higher temperature, and **in that** the ventilation means (20, 21) can bring about a forced circulation of air between the cooled compartment (4) and the compartment (5) which is at a higher temperature, when they are put into communication with one another.

7. A refrigeration system according to Claim 6, **characterized in that** the defrosting of the evaporator (15) is carried out by causing it to be bathed by the air coming from the second compartment (5), which is kept at a temperature above 0°C.

8. A refrigeration system according to any one of Claims 1 to 7, **characterized in that** the forced circulation of the air is also variable according to a period of time selected by a user in order to bring a predetermined mass to be cooled to a certain temperature.

9. A refrigeration system according to Claim 1 or any one of Claims 3 to 7, when not dependent on Claim 2, **characterized in that** the forced circulation of air is variable according to a period of time selected by a user in order to bring a predetermined mass to be cooled to a predetermined temperature.

10. A refrigeration system according to any one of the preceding claims, in which the system is a refrigerator for domestic use and the cooled compartment (4) is a freezer compartment.
